Europäisches Patentamt

European Patent Office

Office européen des brevets

(11) Veröffentlichungsnummer: **0 032 244**
**B1**

(12) **EUROPÄISCHE PATENTSCHRIFT**

(45) Veröffentlichungstag der Patentschrift: **26.06.85**

(51) Int. Cl.⁴: **A 47 K 13/18, B 32 B 31/30**

(21) Anmeldenummer: **80108243.9**

(22) Anmeldetag: **30.12.80**

(54) **Verbundfolie und Verfahren zu ihrer Herstellung.**

(30) Priorität: **09.01.80 DE 3000516**

(43) Veröffentlichungstag der Anmeldung:
**22.07.81 Patentblatt 81/29**

(45) Bekanntmachung des Hinweises auf die
Patenterteilung:
**26.06.85 Patentblatt 85/26**

(84) Benannte Vertragsstaaten:
**AT BE CH DE FR GB IT LI LU NL SE**

(56) Entgegenhaltungen:
**DE-A-2 455 732**
**DE-A-2 504 494**
**DE-A-2 703 005**
**DE-A-2 732 965**
**FR-A- 960 043**
**FR-A-1 426 474**

(73) Patentinhaber: **Belz, Roland Karl**
**Sonnenhalde 31**
**D-7022 Leinfelden-Echterdingen-1 (DE)**

(72) Erfinder: **Belz, Roland Karl**
**Sonnenhalde 31**
**D-7022 Leinfelden-Echterdingen-1 (DE)**

(74) Vertreter: **Patentanwälte Ruff und Beier**
**Neckarstrasse 50**
**D-7000 Stuttgart 1 (DE)**

Courier Press, Leamington Spa, England.

**Beschreibung**

Die Erfindung betrifft eine Verbundfolie aus mindestens zwei Schichten, die von einer Seite her wasserfest und von der anderen Seite her wasserlöslich ist, wobei mindestens eine in Wasser normalerweise unlösliche, aber in saurem oder basischem Medium lösbare Versiegelungsschicht mit einer in Wasser löslichen Schicht verbunden ist und die Folie im Bereich der wasserlöslichen Schicht einen sauren bzw. basischen Lösungsvermittler für die Versiegelungsschicht enthält sowie ein Verfahren zur Herstellung dieser Verbundfolie. In der Teilanmeldung veröffentlicht als EP—A—78 553 wird eine Verpackungsfolie beansprucht, die mit den gleichen Merkmalen gekennzeichnet wird, wie die Verbundfolie der vorliegenden Anmeldung.

In der deutschen Offenlegungsschrift 27 03 005 des Anmelders ist eine Toilettensitzauflage aus einer solchen Verbundfolie beschrieben, die zusätzlich noch in der in wasserlöslichen Schicht verankerte Fasern aufweist. Bei der Herstellung dieser Toilettensitzauflage werden die einzelnen Schichten der Verbundfolie durch Aufbringen von Lösungen der Folienmaterialien auf geeignete Unterlagen und Abdampfen der Lösungsmittel hergestellt. Dieses Verfahren ist jedoch verhältnismäßig aufwendig, da die geeigneten Verdampfungseinrichtungen erforderlich sind und auch die Handhabung mit organischen Lösungsmitteln besondere Vorkehrungen erfordert. Außerdem hat sich gezeigt, daß die Versiegelungsschicht nicht die gewünschte Porenfreiheit besitzt, was darauf zurückzuführen ist, daß sich beim Verdunsten des Lösungsmittels aus dem Film der Versiegelungsschicht Bläschen bilden, die beim Trocknen Poren ergeben. In dieser Druckschrift ist auch die Verwendung von in organischen Lösungsmitteln gelösten thermoplastischen Kunststoffen für eine in Wasser unlösliche Versiegelungsschicht beschrieben. Eine solche Versiegelungsschicht ist jedoch in wässrigen Medien nicht lösbar und schrumpft nach Auflösen der in Wasser löslichen Schicht lediglich zusammen.

Der Erfindung liegt die Aufgabe zugrunde, eine Verbundfolie der eingangs beschriebenen Art zu schaffen, deren Porenfreiheit im Vergleich zu der bekannten Folie verbessert ist und die sich einfacher und kostengünstiger herstellen läßt.

Diese Aufgabe wird dadurch gelöst, daß die in Wasser an sich unlösliche Schicht aus einem extrudierbaren Thermoplast besteht und die in Wasser lösliche Schicht aus einem extrudierbaren wasserlöslichen Thermoplast oder einem in Wasser nicht löslichen, in saurem oder basischem Medium aber lösbaren extrudierbaren Thermoplast besteht und die Folie den sauren bzw. basischen Lösungsvermittler in einer Menge enthält, die zur Auflösung der in Wasser an sich unlöslichen Versiegelungsschicht und ggf. auch des in Wasser nicht löslichen Materials der wasserlöslichen Schicht ausreicht und die in Wasser normalerweise unlösliche Schicht als völlig dichte Extrusionsfolie ausgebildet ist.

Durch die Verwendung von extrudierbaren thermoplastischen Kunststoffen, die in Wasser unlöslich, in Basen oder Säuren aber löslich sind und dadurch, daß die Versiegelungsschicht und vorzugsweise auch die weiteren Schichten der Verbundfolie durch Extrusion gebildet sind, ist eine völlige Dichtheit von der Seite der Versiegelungsschicht her gewährleistet. Durch Extrudieren lassen sich die einzelnen Folien völlig porenfrei herstellen. Außerdem kann mit Hilfe eines Extruders die Schichtdicke der Einzelfolien wesentlich leichter variiert werden, als dies bei der Herstellung der Einzelschichten aus Lösungen der Fall ist, wodurch sich der Aufbau der Verbundfolie und das Verhältnis der Materialstärken der einzelnen Schichten zueinander dem jeweiligen Verwendungszweck leicht anpassen lassen. Während beim Lösungsverfahren nach der deutschen Offenlegeungsschrift 27 03 005 bei der Wahl des Materials für die einzelnen Schichten darauf geachtet werden mußte, daß unterschiedliche Löslichkeiten in den zur Herstellung der Schichten verwendeten Lösungsmittel vorlagen, um ein Auflösen einer bereits hergestellten Schicht beim Aufbringen der nächsten zu vermeiden, besteht dieses Problem beim "Trockenverfahren" nach der Erfindung nicht. Die Materialien für die einzelnen Schichten können vielmehr nach den Eigenschaften ausgesucht werden, die sie im fertigen Produkt haben sollen. Es können somit alle Schichten im gleichen Lösungsmittel, ausgenommen Wasser, löslich sein.

Insbesondere dann, wenn die Verbundfolie eine Toilettensitzauflage darstellt, kann die der Versiegelungsschicht abgewandte Seite der Folie in an sich bekannter Weise eine textile Beschichtung aus Einzelfasern aufweisen, die in der Folienoberseite verankert oder mit dieser verklebt sind. Dabei kann die Länge der Fasern, die in begrenztem Maße unter einander verfilzt sind, im Bereich von ca. 0,01 bis 2 mm oder höher liegen. Die Fasern bringen eine mechanische Verstärkung der Folie und verhindern deren Zusammenschrumpfen und Verkleben. Trotzdem läßt sich die Folie nach ihrem Gebrauch völlig auflösen, da die Fasern zwar in gewisser Weise miteinander verfilzt, aber nicht bleibend miteinander verbunden sind. Als Fasern werden vorzugsweise solche aus Cellulose, insbesondere Baumwolle verwendet. Aber auch andere Faserstoffe sind geeignet.

Die Versiegelungsschicht und die nächstfolgende und ggf. weitere Schichten sind vorzugsweise flächig miteinander verbunden, insbesondere verschweißt. Sie können jedoch auch durch Anlösen der einen und/oder der anderen Oberfläche oder mit Hilfe eines Klebers verklebt sein. Die in Wasser unlösliche Versiegelungsschicht und die in Wasser lösliche Schicht, die wegen ihrer häufig größeren Schichtdicke auch Trägerschicht genannt wird, bestehen vorzugsweise aus demselben, in Wasser normalerweise unlöslichen, Kunststoff, wobei die wasserlösliche Schicht zusätzlich lösungsvermittelnde Zusätze für sich und die Versiegelungsschicht enthält. Dabei können diese Zusätze in der Trägerschicht gleichmäßig verteilt oder im Grenzbereich zur Versiegelungsschicht in höherer Konzentration vorliegen. Dies hängt in der Regel davon ab, wie dick die Versiegelungsschicht ist und wie leicht sich die Unlöslichkeit in Wasser mit Hilfe des Lösungsvermittlers in eine Löslichkeit unwandeln läßt. Die Trägerschicht kann, wenn sie aus einem in Wasser löslichen Material, wie Hydroxypropylcellulose, besteht, auch frei von lösungsvermittelnden Zusätzen sein, wobei dann eine zusätzliche Zwischenschicht vorgesehen sein kann, die die lösungsvermittelnden Zusätze enthält und zwischen Versiegelungsschicht und Trägerschicht angeordnet ist.

Da die in Wasser normalerweise unlösliche Versiegelungsschicht nicht selbsttragend sein braucht, kann sie in der Regel sehr dünn gehalten werden, da sich gezeigt hat, daß eine Schichtdicke von 1 bis 5 µm, insbesondere 2 bis 3 µm bereits völlig ausreicht, um die gewünschte Dichtigkeit zu erzielen. In der Regel liegt daher die Schichtdicke der Versiegelungsschicht unter 10 µm. Die Dicke der wasserlöslichen Schicht hängt davon ab, wieviel weitere Schichten die Verbundfolie noch enthält und welche mechanischen Belastungen sie aushalten soll. Insbesondere dann, wenn außer der Versiegelungsschicht keine weitere Kunststoffschicht vorgesehen ist, die wasserlösliche Schicht aber mit einem Textilbelag versehen ist, liegt ihre Schichtdicke in der Regel zwischen ca. 5 bis 50, insbesondere 10 bis 12 µm.

Als Material für die Versiegelungsschicht eignen sich solche Kunststoffe, die in Wasser und den üblicherweise vorkommenden neutralen wässrigen Lösungen nicht löslich sind, durch geeignete Lösungsvermittler, insbesondere Säuren oder Basen aber löslich gemacht werden können. Die Trägerfolie kann dagegen aus einem wasserlöslichen oder verzögert löslichen Kunststoff wie weichgemachtem Poyvinylalkohol oder Hydroxypropylcellulose (Klucel J von Hercules Powder) bestehen. Es ist aber auch mit Vorteil möglich, für die Versiegelungsschicht und auch für die Trägerschicht einen an sich in Wasser nicht löslichen Kunststoff bzw. eine Kunststoffmischung zu verwenden und den für die Trägerschicht verwendeten Kunststoff durch Einlagerung des Lösungsvermittlers löslich zu machen. Dabei handelt es sich bei den Kunststoffen für die Versiegelungsschicht um solche, die extrudierbar sind und bei denen für die wasserlösliche Schicht vorzugsweise um solche, die zusammen mit dem Lösungsvermittler extrudierbar sind.

Bevorzugte Materialien für die Versiegelungsschicht sind Polymere, insbesondere Mischpolymere, von ungesättigten organischen Säuren, wie Acrylsäure, Methacrylsäure und insbesondere Maleinsäureanhydrid. Erwähnt seien hier insbesondere wegen ihrer flexiblen Eigenschaften Coplymere von Maleinsäureanhydrid und Äthylvinyläther, insbesondere solche, die im Verhältnis 1:1 hergestellt sind; weiterhin Copolymere aus Maleinsäureanhydrid, Methacrylat bzw. Terpolymere aus Maleinsäureanhydrid, Methacrylat und Butylacrylat; weiterhin Methacrylsäure- bzw. Acrylsäurecopolymere, insbesondere Copolymere von Acrylsäure mit Methacrylat. Dabei sind stets solche Polymere bevorzugt, die lösungsmittelfrei sind, insbesondere Block- bzw. Substanzpolymerisate.

So besteht bei einer Ausführungsform vorzugsweise mindestens die Versiegelungsschicht aus einer thermoplastischen, in Wasser unlöslichen, jedoch in basischem Medium löslichen homopolymeren oder copolymeren Säure, insbesondere einer solchen, die unter Verwendung von Acrylsäure, Methacrylsäure Crotonsäure und/oder Maleinsäure gewonnen ist. Die Versiegelungsschicht kann auch aus einer im basischen Medium löslichen copolymeren oder terpolymeren Säure bestehen, wobei als Comonomere bzw. Termonomere Vinyläther, Acrylate und Methacrylate bevorzugt sind. Auch Copolymere bzw. Terpolymere aus Maleinsäureanhydrid, wobei als Comonomere bzw. Termonomere bevorzugt Vinyläther, Acrylate und Methacrylate fungieren, sind geeignet. Als Trägerschicht kann andererseits auch ein thermoplastisches wasserlösliches Cellulosederivat verwendet werden. Bevorzugte Cellulisederivate sind Hydroxyäthylcellulose und Hydroxypropylcellulose.

Geeignete extrudierbare Kunststoffe sind auch feste Copolymerisate aus Vinylacetat und einem geringen Teil Crotonsäure, die als niedrigviskoses Polymerisat vorliegen und alkalilöslich sind. Ein derartiges Polymerisat wird beispielsweise unter der Bezeichnung Vinnapas C 305 von der Firma Wacker-Chemie GmbH, München vertrieben, das bisher in gelöster Form verarbeitet wurde. Ein weiteres geeignetes Produkt ist ein Ester aus Phthalsäure und Pentaerythrit in Form eines äthanol- und alkalilöslichen Hartharzes, wie es von der Firma BASF unter der Bezeichnung Phthalopal PP als Hartharz für die Herstellung von Papierlacken und Holzlacken vertrieben wird. Die Kunststoffe können in Form von Mischungen untereinander und mit Weichharzen, üblichen Weichmachern, Füllern und anderen Zusätzen vorliegen.

Es hat sich herausgestellt, daß es besonders für die Versiegelungsschicht vorteilhaft ist, wenn sie noch gummielastische Zusätze enthält, was sich insbesondere bei Toilettensitzauflagen zur Erzielung der Rutschfestigkeit günstig auswirkt. Die gummielastischen bzw. kautschukartigen elastomeren Zusätze brauchen nicht durch den Lösungsvermittler lösbar zu sein. Da solche Zusätze die Elastizität der Folie erhöhen und ein Aneinanderkleben von Verbundfolien aneinander verhindern können, sind sie auch mit Vorteil in der Trägerschicht enthalten. Als Elastomer-Zusatz hat sich ein Anteil an Block-Copolymeren mit einer Polystyrol-Polybutadien-Polystyrol-Struktur als besonders bevorzugt erwiesen. Auch können die einzelnen Schichten der Verbundfolie aus Mischungen von Kunststoffen bestehen.

Als Lösungsvermittler zum Auflösen der Versiegelungsschicht kommen insbesondere wasserlösliche Carbonate, sekundäre und tertiäre Phosphate, insbesondere Triammoniumphosphat, Silicate, Borate und Amine, insbesondere Triäthanolamin in Betracht. Die Mitverwendung von sog. Sprengmitteln, die bei Kontakt mit Wasser stark aufquellen oder Gase erzeugen, kann ebenfalls von Vorteil sein. Ein solches Sprengmittel ist beispielsweise Natriumcarboxymethylcellulose (Nymcel ZSB 10 von Nyma). Dabei wird

3

bei sämtlichen Materialien für die Verbundfolie vorzugsweise darauf geachtet, daß sie umweltfreundlich sind, wie dies bei den oben genannten Produkten weitgehend der Fall ist.

Gegenstand der Erfindung ist auch ein Verfahren zur kontinuierlichen Herstellung einer aus mindestens zwei miteinander verbundenen Schichten bestehenden Verbundfolie, die von einer Seite her wasserfest und von der anderen Seite der wasserlöslich ist, wobei die wasserfeste Schicht aus einem in saurem oder basischem Medium lösbaren Kunststoff besteht und die in Wasser lösliche Schicht einen sauren oder basischen Lösungsvermittler für die wasserfeste Schicht enthält. Dieses Verfahren ist dadurch gekennzeichnet, daß die wasserfeste Schicht einerseits und die in Wasserlösliche, den Lösungsvermittler enthaltende Schicht andererseits unter Verwendung von thermoplastischen Kunststoffen durch Extrusion hergestellt und miteinander verbunden werden. Dabei können die einzelnen Schichten als getrennte Folien extrudiert und danach miteinander verbunden werden. Die Verbindung erfolgt vorzugsweise, solange die Folien noch heiß und Klebrig sind, durch einfaches Aufeinanderlegen. Die Oberflächen können jedoch, wie bereits erwähnt, auch nachträglich klebrig gemacht werden. Die aus dem Extruder kommenden und ggf. gereckten Folien können unmittelbar weiterverarbeitet oder zur Zwischenlagerung aufgerollt werden und zwar einzeln und vorzugsweise auch als Verbundfolie.

Bei einer Ausführungsform der Erfindung werden die beiden Schichten durch eine Koextrusionsdüse extrudiert und dabei miteinander verbunden. Hierdurch wird eine besonders innige Verbindung erhalten. Es sollte jedoch bei dieser Ausführungsform darauf geachtet werden, daß die Bestandteile der beiden Schichten so aufeinander abgestimmt sind, daß eventuell entstehende Abfälle in dem einen oder anderen Extruder wieder verwendbar sind, ohne die Materialzusammensetzung der Schichten nachteilig zu beeinflussen. So werden Abfälle, die Lösungsvermittler enthalten, zur Herstellung einer den Lösungsvermittler enthaltenden wasserlöslichen Schicht oder Zwischenschicht wiederverwendet.

In der Regel kommen die einzelnen Folien dicker aus dem Extruder heraus als der gewünschten Dicke in der Verbundfolie entspricht. In diesem Falle werden die Folien auf die gewünschte Dicke gereckt, was einzeln oder im Verbund geschehen kann.

Bei einer Ausführungsform der Erfindung dient das Verfahren zur Herstellung von Verbundfolien mit Ausschnitten und/oder von der Geraden abweichenden Rändern. Bei dieser Ausführungsform werden die Ränder und/oder Ausschnitte in kontinuierlicher Weise thermisch, insbesondere durch Trennschweißen beschnitten. Dabei ist es möglich, das Beschneiden bereits in einem Verbund von mindestens zwei Schichten vorzunehmen. Werden die Schichten der Verbundfolie jedoch in Form von Einzelfolien hergestellt, die miteinander verbunden werden, dann werden diese Einzelfolien vorzugsweise zeitlich nacheinander mit Werkzeugen beschnitten, die sich mit den beschnittenen Folien mitbewegen und die nachfolgend auf die bereits beschnittenen Folien aufgelegten Folien paßgenau zu diesen zuschneiden. Dadurch wird das sogenannte Passerproblem in einfacher Weise umgangen. Soll die Verbundfolie, wie es bei einem Endlosband aus Toilettensitzauflagen der Fall ist, periodisch wiederkehrende Randformen und/oder Ausschnitte aufweisen, dann wird für die Bildung dieser Endlosbänder vorzugweise eine endlos umlaufende Fördereinrichtung verwendet, auf der die Beschneideeinrichtungen in einem ganzzahligen Vielfachen der Periode der wiederkehrenden Randformen angeordnet sind. Durch das Beschneiden der einzelnen Folien an örtlich getrennten Stellen ist es möglich, die durch das Beschneiden der einzelnen Folien gebildeten Abfälle getrennt aufzufangen und dem zugehörigen Extruder zur Wiederverwendung wieder zurückzuführen. Aus einem ähnlichen Grunde ist es auch bevorzugt, eine Beschichtung der Oberfläche der Verbundfolie mit textilen Fasern erst dann vorzunehmen, wenn die Verbundfolie, falls dies der Fall ist, beschnitten ist, wodurch vermieden wird, daß die Folienabfälle in unerwünschter Weise mit Fasern vermengt sind.

Eine Vorrichtung zur Herstellung der Verbundfolie weist mindestens zwei Extruder mit zugehörigen Breitschlitz- oder Ringdüsen und mindestens eine Einrichtung zum kontinuierlichen Abziehen und Zusammenführen der gebildeten Folien auf. Dabei kann mindestens eine mit den Folien mitbewegbare Trenneinrichtung zum Abtrennen von Randstreifen und/oder Ausschnitten vorgesehen sein, wobei mindestens eine der vorgenannten Einrichtungen auf einer endlosen Fördereinrichtung angeordnet ist oder von dieser gebildet wird. Die Extruder und Düsen sind vorzugsweise zu Koextrusionseinrichtungen zusammengefaßt.

Soll die Verbundfolie in Form von Bahnen oder Zuschnitten mit periodisch wiederkehrenden Randformen und/oder Ausschnitten hergestellt werden, dann besitzt die Oberfläche der Fördereinrichtung vorzugsweise die Form der herzustellenden Verbundfolie, wobei die Ränder der Oberfläche von Trenneinrichtungen eingesäumt werden. Als Trenneinrichtungen sind vorzugsweise Trennschweißdrähte oder Trennschweißbänder vorgesehen, die die Ränder der Oberfläche der Fördereinrichtung begrenzen und geringfügig über die Oberfläche überstehen, um die Trennung zu erzielen. Die Fördereinrichtung ist mit Vorteil als eine Walze, insbesondere eine Hohlwalze ausgebildet. Unter der Oberfläche der Fördereinrichtung, insbesondere unter der Walzenoberfläche können sich im Bereich der Stellen, an denen die Beschneidung der Folien erfolgt, Saugeinrichtungen zum Auffangen und Rückführen der abgetrennten Folienreste befinden. Eine Beflockungseinrichtung ist mit Vorteil an einer Stelle in Bewegungsrichtung der Fördereinrichtung vorgesehen, die hinter den Beschneidungsstellen liegt, wodurch erreicht wird, daß nur die Oberflächenteile der Verbundfolie mit dem textilen Belag versehen werden, die am gewünschten Endlosband verbleiben.

4

Der Durchmesser der Walze kann in der Größe von ca. 2500 bis 3000 mm liegen, so daß sich ein Umfang von über 9 m ergibt. Daraus ist ersichtlich, daß eine Umfangslänge bereits eine Vielzahl von einzelnen Periodenlängen, z. B. von Toilettensitzauflagen umfassen kann, wodurch sich eine hohe Abzugsgeschwindigkeit, verbunden mit einer ausreichenden Kühlung der Folie ergibt. Falls erwünscht, kann der Durchmesser der Walze jedoch auch wesentlich geringer gehalten werden, z. B. 1 m oder weniger, insbesondere dann, wenn zwischen Extruder und Walze noch Kühlwalzen und ggf. Reckwalzen für die Folie vorgesehen sind. Das Vorschalten von Kühl- und Reckwalzen ist besonders dann vorteilhaft, wenn die einzelnen Schichten der Verbundfolie in einer Koextrusionsdüse miteinander verbunden werden.

Für die erfindungsgemäße Folie gibt es zahlreiche Anwendungsmöglichkeiten, die vor allem auch auf dem Verpackungssektor liegen. Die Beseitigung von nicht mehr brauchbaren Verpackungsmaterialien stellt heute ein erhebliches Problem dar. Dies kann durch die erfindungsgemäße Folie beseitigt werden, da sie nach Gebrauch in Wasser bzw. wässrigen Lösungen aufgelöst werden kann und in ihrer Materialbeschaffenheit so zusammengesetzt werden kann, daß die dabei in Lösung gehenden Stoffe unschädlich bzw. umweltfreundlich sind. Die Maleinsäureanhydrid-Copolymere ergeben nach der Hydrolyse ähnliche Produkte wie die in großem Umfang als Flockungshilfsmittel bei der Klärschlammaufbereitung ver-wendeten Polymeren auf Acrylsäurebasis. Sie sind daher im Abwasser ebenso wenig schädlich wie die Acrylsäure-Copolymeren.

Das Cellulosederivat Klucel ist nach Herstellerangaben in toxikologischer Hinsicht ebenso einzuschätzen wie gereinigte Cellulose.

Die als Lösungsvermittler einsetzbaren Carbonate, Phosphate, Silicate, Borate und Triäthanolamin sind Bestandteile von Waschmitteln, ebenso das Sprengmittel Klucel, das auch als Flockungshilfsmittel eingesetzt werden kann.

Da die erfindungsgemäße Verbundfolie aus thermoplastischen Materialien besteht, können die Verpackungen aus der Folie durch Verschweißen oder Versiegeln dicht verschlossen werden.

Besonders vorteilhaft sind verschließbare bzw. verschlossene Beutel aus der erfindungsgemäßen Verbundfolie in Form von sogenannten Funktionspackungen, worauf später noch eingegangen wird.

Dabei besitzen alle Verpackungsformen die Eigenschaft, daß sie sich beim Wegwerfen nach dem Gebrauch in wässrigem Milieu auflösen oder bei Zutritt von Feuchtigkeit, z. B. im Freien, innerhalb kurzer Zeit verrotten.

Bei einer bevorzugten Ausführungsform der Erfindung besitzt die Folie die Form eines Sackes, einer Tüte, eines Beutels, einer Tragtasche o. dgl., wobei die Wandung jeweils so ausgebildet ist, daß sie sowohl so ihrer Innen- als auch an ihrer Außenseite eine Versiegelungsschicht aufweist. Dies kann dadurch erreicht werden, daß zur Bildung einer Wandung jeweils zwei Verbundfolien so aufeinander gelegt werden, daß ihre wasserlöslichen Seiten einander zugewandt sind und die Versiegelungsschichten nach außen weisen. Auf diese Weise sind die Säcke u. dgl. feuchtigkeitsunempfindlich. Werden die Säcke dagegen nach ihrem Gebrauch mechanisch aufgerissen, dann kann Wasser zwischen die wasserlöslichen Schichten der Folie gelangen, so daß sich die Folien und damit die Säcke u. dgl. auflösen können. Es ist aber auch möglich, die Verbundfolie so auszubilden, daß eine wasserlösliche Trägerschicht beidseitig mit einer Versiegelungsschicht versehen ist. Nach einer mechanischen Zerstörung ist auch diese Folie völlig auflösbar, da das Wasser zwischen den Versiegelungsschichten in die Folie eindrigen und die Trägerschicht und danach die Versiegelungsschichten lösen kann. Bei dieser Ausführungsform ist es weiterhin möglich, die Trägerschicht im Inneren porös auszubilden oder mit einer saugfähigen Einlage zu versehen, wodurch das Eindringen von Wasser in die Trägerschicht begünstigt und damit der Auflösevorgang beschleunigt wird.

Wie oben bereits erwähnt, hängt die Dicke und die Zusammensetzung der Trägerschicht im wesentlichen von den gewünschten Eigenschaften, insbesondere von der mechanischen Festigkeit der Verbundfolie ab. Die Dicke der Trägerschicht bzw. der Trägerschichten kann dabei bis zu 0,5 mm oder gar bis 1 mm betragen, wobei hier keine Grenzen gesetzt sind. Auch können in die Schichten oder zwischen die Schichten noch Verstärkungen eingelegt sein, wobei vorzugsweise darauf geachtet wird, daß die Verstärkungen ihrerseits beim Auflösevorgang leicht zerfallen, wie dies beispielsweise bei Einzelfasern der Fall ist. Besitzt die Verbundfolie an der löslichen Seite und/oder an der Versiegelungsschicht einen textilen Belag, dann eignen sie sich auch mit Vorteil als Einmal-Bettwäsche, deren Beseititung kein Problem darstellt. Weiterhin ist es möglich, z. B. für schlauchförmige Verpackungen, die erfindungsgemäße Verbundfolie in Form einer Schlauchware oder Blasfolie herzustellen, wozu es lediglich erforderlich ist, entsprechende ringförmige Extruderdüsen vorzusehen.

Die physikalischen und auch die chemischen Eigenschaften der einzelnen Schichten der Verbundfolie können dadurch variiert werden, daß für diese Schichten Kunststofformulierungen verwendet werden, deren Zusammensetzung entsprechender Weise variiert wird. Die Auflösungsgeschwindigkeit der einzelnen Schichten kann durch das Verhältnis des Säureanteils im Copolymeren bzw. Terpolymeren zum Anteil an Comonomeren bzw. Termonomeren sowie zusätzlich durch Art und Gehalt des Lösungsvermittlers in der Trägerschicht bestimmt werden. Weiterhin kann die Auflösungsgeschwindigkeit für die Verbundfolie dadurch vermindert werden, daß weniger gut lösliche oder nicht gut lösliche Stoffe in disperser Phase oder in gelöster Form in die Materialien der einzelnen Schichten eingelagert werden. Falls erwünscht, können in die eine und/oder andere Schicht auch die Klebrigkeit erhöhende Zusätze eingelagert werden.

So hat es sich als vorteilhaft erwiesen, einen icht trocknenden Haftkleber einzumischen (z. B. Lutonal M 40), um die erwünschte Klebrigkeit für eine Beflockung mit Textilfasern zu erzeugen. Natürlich können zur Beschichtung mit den Textilfasern auch zusätzliche Kleber verwendet werden, wie z. B. Polyvinylpyrrolidon, die auf die mit den Fasern zu belegende Oberflächenschicht aufgebracht werden.

Weitere Merkmale der Erfindung ergeben sich aus der folgenden Beschreibung von bevorzugten Ausführungsformen in Verbindung mit der Zeichnung und den Ansprüchen.

In der Zeichnung zeigen:

Fig. 1 einen Querschnitt durch eine Verbundfolie nach der Erfindung,

Fig. 2 einen Ausschnitt aus einem Endlosband der Verbundfolie nach Fig. 1 in Form von aneinander gereihten Toilettensitzauflagen,

Fig. 3 eine schematische Darstellung einer Vorrichtung zur Herstellung des Endlosbandes nach Fig. 2,

Fig. 4 eine Seitenansicht der Walze nach Fig. 3 in Richtung des Pfeiles A und

Fig. 5 eine schematische Darstellung einer anderen Ausführungsform der erfindungsgemäßen Vorrichtung zur Herstellung der Verbundfolie.

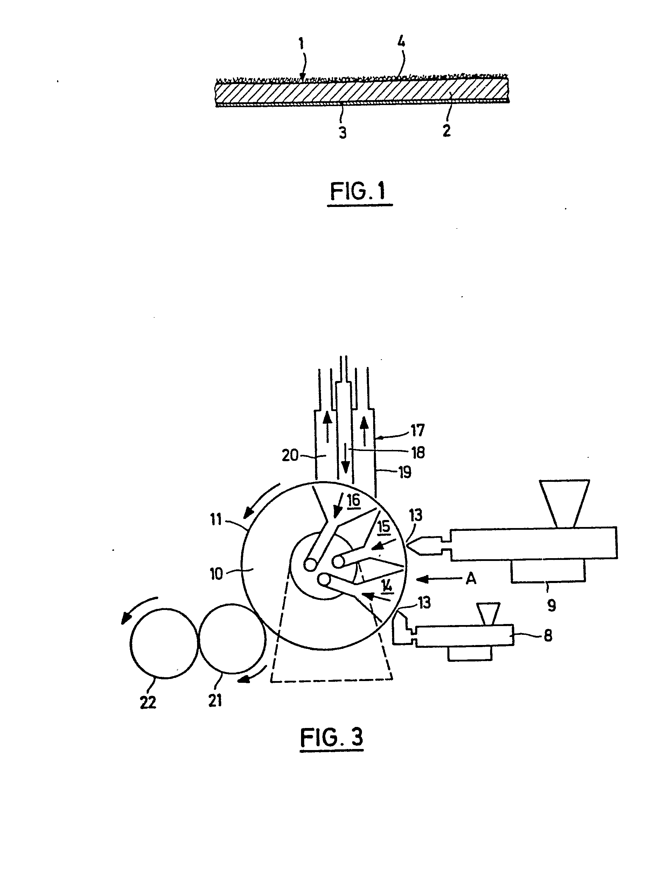

Die in Fig. 1 dargestellte Verbundfolie 1 ist aus drei Schichten aufgebaut. Eine als Trägerschicht 2 bezeichnete wasserlösliche Schicht mit einer Stärke von ca. 10 bis 12 μm besteht aus einem in basischem Medium löslichen Copolymeren aus Maleinsäureanhydrid und Äthylvinyläther. Zusätzlich kann die Trägerschicht noch Wechmacher, Weichharze und/oder andere Zusätze enthalten. Die Trägerschicht ist aufgrund eines Gehaltes an basischem Lösungsvermittler, wie Dinatriumphosphat wasserlöslich, da bei Einwirkung von Wasser das Milieu infolge der Auslösung des Lösungsvermittlers basisch wird und dadurch die Trägerschicht aufzulösen vermag. Die Unterseite der Trägerschicht ist mit einer nur ca. 2 bis 3 μm starken, völlig porenfreien Versiegelungsschicht 3 aus demselben Material wie die Trägerschicht 2 versehen, das hier allerdings keinen eingelagerten Lösungsvermittler enthält, weshalb die Versiegelungsschicht in neutralen wässrigen Lösungen unlöslich ist. Die beiden Schichten sind vollflächig miteinander verschweißt bzw. verklebt. An ihrer der Versiegelungsschicht 3 abgewandten Seite weist die Trägerschicht 2 einen Belag 4 aus textilen Fasern auf, die in der Trägerschicht 2 verankert sind und über den größten Teil ihrer Länge frei an der Oberfläche liegen. Bei den Fasern handelt es sich um Cellulosefasern mit einer Länge von ca. 0,1 bis 1 mm. Der Belag aus den Textilfasern hat verschieden Aufgaben. So verhindert er, daß die verhältnismäßig dünne Verbundfolie bei der Handhabung zusammenschrumpft und die Flächen aneinander haften bleiben, wie dies bei dünnen Folien vielfach der Fall ist.

Weiterhin hat der Belag wärmeisolierende Eigenschaften und vermag außerdem eine gewisse Feuchtigkeit aufzunehmen, ohne daß dadurch die Verbundfolie angelöst wird. Die Verbundfolie ist vollständig wasserlöslich, wobei eine Auflösung jedoch nur dann erfolgen kann, wenn Wasser an der Seite der Verbundfolie angreift, an der sie mit dem textilen Belag versehen ist. Dort ist nämlich das Copolymerisat wegen des eingelagerten Lösungsvermittlers, wie oben erwähnt, wasserlöslich. Da bei der Auflösung der Trägerschicht 2 und des Lösungsvermittlers ein basisches Medium gebildet wird, wird die dünne Versiegelungsschicht von diesem Medium mit aufgelöst. Kommt dagegen Wasser lediglich an die Oberfläche der Versiegelungsschicht 3, dann mag dieses Wasser die Versiegelungsschicht nicht anzugreifen, so daß die gesamte Verbundfolie unangegriffen bleibt.

Die Verbundfolie eignet sich besonders zur Herstellung von Toilettensitzauflagen, sie kann jedoch mit besonderem Vorteil überall dort eingesetzt werden, wo ein Schutz vor Feuchtigkeit und Nässe gewünscht ist, insbesondere bei Verpackungen, und andererseits eine umweltfreundliche Beseitigung des verbrauchten Materials angestrebt wird. Die Folie kann mit großem Vorteil auch zu einem Funktionsbeutel geformt sein. Hat ein solcher Beutel die Versiegelungsschicht an der Außenseite, dann eignet er sich zum Aufbewahren von Stoffen, die trocken sind oder die wasserlösliche Trägerschicht nicht zu lösen vermögen. Öffnet man den Beutel und bringt ihn mit Wasser zusammen, dann löst er sich auf und gibt seinen Inhalt frei. Ist die Versiegelungsschicht innen, dann können in dem Beutel wässrige nicht alkalisch wirkende Stoffe aufbewahrt werden, z. B. Badezusätze u. dgl. Wird der noch geschlossene Beutel mit seiner wasserlöslichen Außenseite in Wasser gegeben, löst er sich auf und gibt seinen inhalt frei.

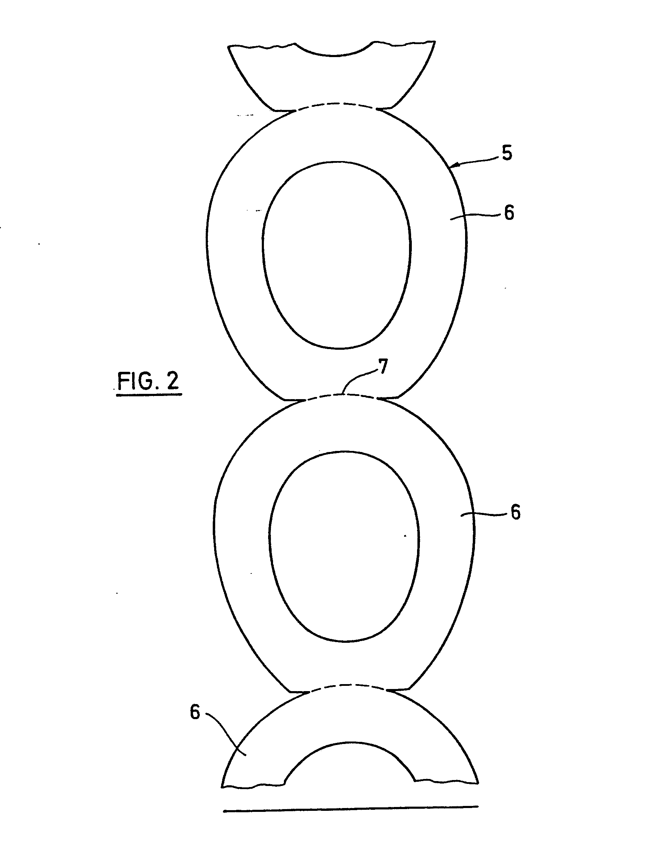

Das in Fig. 2 dargestellte Endlosband 5 setzt sich aus einer Vielzahl von aneinandergereihten Toilettensitzauflagen 6 zusammen, die entlang gemeinsamer perforierter Linien 7 zusammenhängen. Die Toilettensitzauflagen 6 selbst besitzen eine Form, die der üblichen Form der Toilettensitze angepaßt ist. Es sind auch verschiedene Variationen möglich, wie sie bei solchen Auflagen bereits bekannt sind.

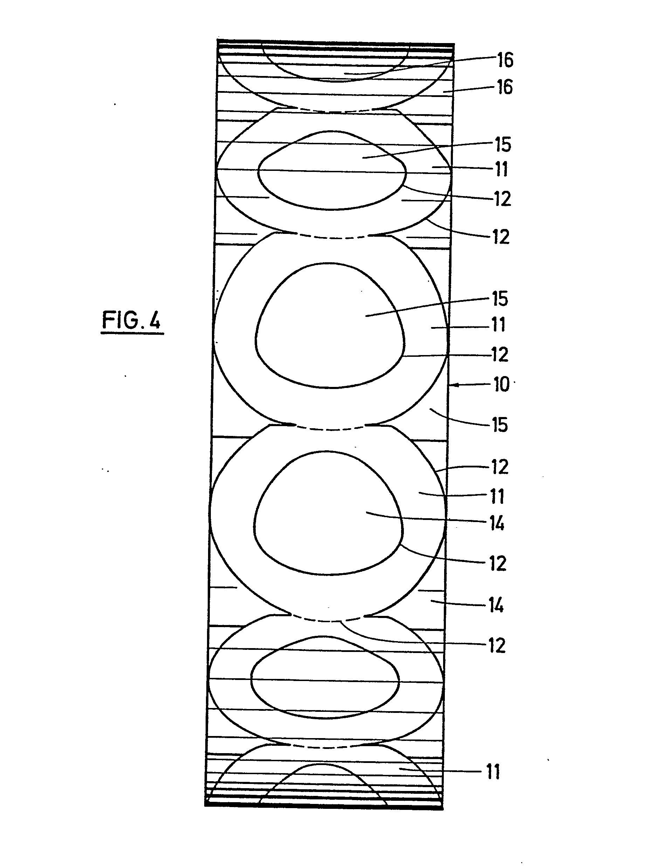

Die in den Figuren 3 und 4 dargestellte Vorrichtung zur Herstellung des Endlosbandes 5 aus Toilettensitzauflagen 6 setzt sich im wesentlichen zusammen aus zwei Extrudern 8 und 9 und einer mit einem nicht dargestellten Antrieb versehenen drehbaren Walze 10, deren Außenumfang einem geradzahligen Vielfachen der Länge der Toilettensitzauflagen und deren maximale Breite der maximalen Breite einer Toilettensitzauflage oder einem mehrfachen davon entsprechen. Bei der in Fig. 3 gezeigten Darstellung ist die Walze entgegen dem Ührzeigersinn antreibbar. Die Oberfläche 11 der Walze 10 stellt einen flächigen Abdruck der Abwicklung des Endlosbandes der aneinander gereihten Toilettensitzauflagen 6 dar. Sie weist die Form des Endlosbandes 5 auf, wobei die den Flächenteilen des Endlosbandes entsprechenden Stellen ebenfalls flächig ausgebildet sind und die ausgeschnittenen Stellen bzw. abgeschnittenen Randstellen des Endlosbandes auch in der Oberfläche 11 der Walze 10 als Aussparung ausgebildet sind. Die Oberfläche 11 kann je nach den gewünschten Eigenschaften aus einem Kunststoff oder aus Metall bestehen. Die Ränder der Walzenoberfläche 11 sind in der Form der Randlinien und der Aussparungsränder des Endlosbandes 5 mit Trennschweißbändern 12 belegt, die zur Beheizung mit geeigneten Stromquellen verbunden sind. Mit Hilfe dieser Trennschweißbänder kann das Endlosband 5 aus den Toilettensitzauflagen 6 aus einer bzw. mehreren Folienbahnen ausgeschnitten werden.

Die beiden Extruder 8 und 9 sind entlang des Umfanges der Walze versetzt angeordnet und zum Extrudieren von dünnen Folien aus thermoplastischem Material eingerichtet, wobei die Breite und die Dicke der Breitschlitzdüse 13 jedes Extruders so eingerichtet ist, daß die Breite der Folien, ggf. nach einem Streckvorgang, geringfügig breiter als die Breite der Walzenoberfläche bzw. des Endlosbandes ist und eine Folie mit der gewünschten Materialstärke gebildet wird. Der, in Bewegungsrichtung der Walze gesehen, erste Extruder dient zur Herstellung einer ca. 2 bis 3 µm dicken Folie zur Bildung der in im wesentlichen neutralen wässrigen Lösungen unlöslichen, aber in basischen Lösungen löslichen Versiegelungsschicht des Verbundmaterials. Zwischen der Breitschlitzdüse 13 des Extruders 8 und der Walze 10 können noch in der Zeichnung nicht dargestellte Umlenk- und Reckrollen vorgesehen sein, die zur Stützung und Dimensionierung der für sich allein nicht tragfähigen Folie dienen. Diese Folie wird beim Auflegen auf die Walze 10 durch die Trennschweißbänder 12 beschnitten. Auf den entsprechenden Zuschnitt wird nun eine vom zweiten Extruder 9 in entsprechender Weise gebildete aber dickere Folie aufgelegt bzw. aufkaschiert. Diese Folie besitzt eine Stärke von ca. 10 bis 12 µm und dient zur Bildung der Trägerschicht der Verbundfolie. Sie enthält den Lösungsvermittler, der zusammen mit dem Copolymer extrudiert wird. Anstelle des Copolymer kann auch ein Cellulosederivat, wie Hydroxypropylcellulose, verwendet werden. Bei Auftreffen auf die Walze 10 wird die zweite Folie in entsprechender Weise wie die erste Folie mit Hilfe der Trennschweißbänder 12 beschnitten. Die Verbindung der beiden Folien wird flächig durch Verschweißung vorgenommen, was erfolgen kann, solange die beiden Folien noch heiß und weich sind oder mit Hilfe einer geeigneten Wärmequelle an der Oberfläche klebrig gemacht sind.

Im Inneren der Walze sind stationär befestigte Saugtrichter 14, 15 und 16 vorgesehen, wobei sich der erste Saugtrichter 14 im Bereich der Auflagestelle der ersten Folie und der zweite Saugtrichter 15 im Bereich der Auflagestelle der zweiten Folie befindet. Durch diese Saugtrichter werden Abfallstücke der beiden Folien getrennt abgeführt, so daß sie ohne Verunreinigung den jeweiligen Extrudern zur Wiederverwendung wieder zugeführt werden können.

Dem dritten Saugtrichter 16, der sich unmittelbar im Anschluß an den zweiten Saugtrichter befindet, ist an der Außenseite der Walze eine Beflockungseinrichtung 17 zugeordnet. Diese Einrichtung weist einen auf die Walzenoberfläche gerichteten Kasten 19 auf, in dem mittig eine Düse 18 zum Zuführen eines Faserluftgemisches auf die Freie Oberfläche der Trägerfolie angeordnet ist. Die Fasern werden vorzugsweise auf diese Schicht aufgeblasen, solange ihre Oberfläche noch klebrig ist. Es ist aber auch möglich, die Oberfläche durch geeignete Beheizung klebrig zu machen oder sie mit einem Lösungsmittel oder einem Kleber zu bestreichen. Der äußere Ringraum 20 des Kastens 19 dient ebenso wie der Saugtrichter 16 zum Absaugen von Überschüssigen Fasern, sie können aber auch zum Ansaugen zusätzlicher Kühlluft vorgesehen sein.

Zur Abnahme der nun fertigen Verbundfolie von der Walze sind zwei weitere Walzen 21 und 22 vorgesehen, die auch als Kühlwalzen ausgebildet sein können und mit denen, falls erwünscht, auch noch eine Pressung bzw. eine Streckung auf die Verbundfolie ausgeübt werden kann. Danach kann das Endlosband 5 aus den Toilettensitzauflagen 6 in einer Verpackungsmaschine gefaltet und in Ausgabeschachteln verpackt werden.

Die Erfindung ist nicht auf die hier beschriebene Ausführungsform beschränkt. Es sind vielmehr zahlreiche Abwandlungen möglich, ohne daß der Rahmen der Erfindung verlassen wird. So kann auch eine Verbundfolie hergestellt werden, die für ihre Verwendung als Verpackungsmaterial wesentlich dickere Schichten aufweist. Auch ist es moglich, die Verbundfolie aus mehreren Schichten herzustellen, wobei einzelne Schichten nicht vollflächig mit der nächsten verbunden sind, sondern Ausbauchungen mit Luftpolstereinlagen besitzen, wie dies bei tiefgesogenen Polstermaterialien der Fall ist.

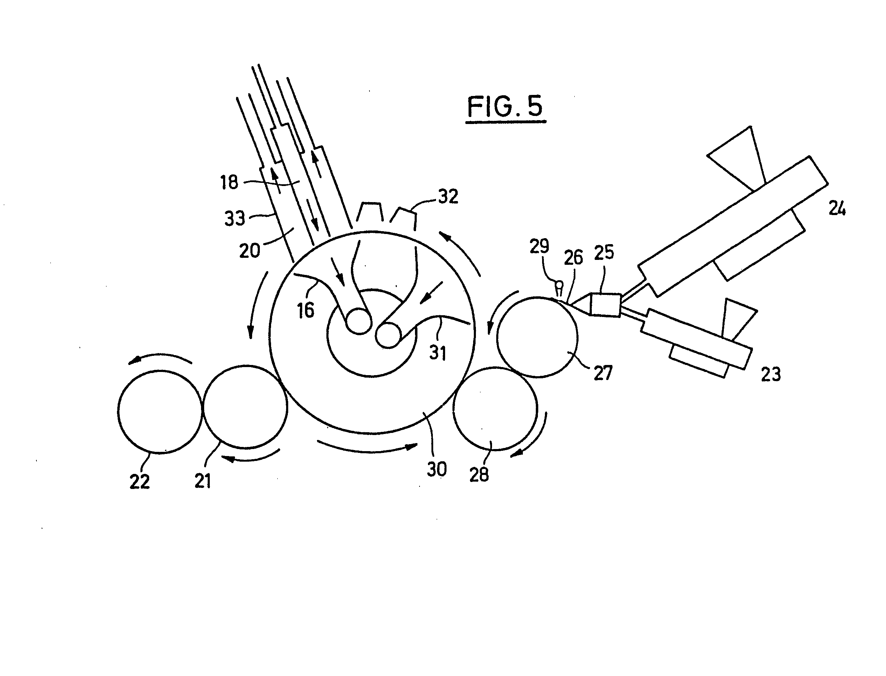

Bei der in Fig. 5 dargestellten Ausführungsform weist die Vorrichtung zur Herstellung der Verbundfolie eine Koextrusionseinrichtung mit zwei Extrudern 23 und 24 auf, deren Ausgänge in einer Koextrusionsdüse 25 zusammengefaßt sind.

Dabei dient der Extruder 23 zum Zuführen des Materials für die Versiegelungsschicht und der Extruder 24 zum Zuführen des Materials für die wasserlösliche Trägerschicht. Zum Aufnehmen und Abziehen der die Extrusionsdüse 25 verlassenden Verbundfolie aus den beiden Schichten dienen zwei Kühlwalzen 27 und 28, mit deren Hilfe die Verbundfolie 26 gleichzeitig um das gewünschte Maß gereckt wird. Ein Luftrakel 29, das über der Anlegestelle der Folie 26 an die erste Kühlwalze 27 angeordnet ist, dient zur zusätzlichen Kühlung und zum Andrücken der Folie an diese Kühlwalze. Nach Verlassen der Kühlwalze 28 ist die Verbundfolie an sich fertig und kann weiteren Verarbeitungseinrichtungen zugeführt werden.

Zum Zwecke der Herstellung von Endlosbahnen von Toilettensitzauflagen ist bei dieser Ausführungsform wiederum eine mit Trennschweißeinrichtungen versehene Walze 30 vorgesehen, deren Durchmesser ca. 50 cm beträgt und deren Oberfläche eine Abwicklung des Endlosbandes der Toilettensitzauflagen darstellt, wobei drei volle Auflagen auf der Walzenoberfläche ausgeformt und durch Trennschweißbänder begrenzt sind. Zum Absaugen der abgeschnittenen Folienabfälle dient bei dieser Vorrichtung ein Absaugtrichter 31, da die Folie beim Auftreffen auf die Walze ja bereits als Verbundfolie vorliegt. Die Abfälle werden dem Extruder 24 für die Herstellung der Trägerschicht wieder zugeführt. Eine Heizeinrichtung 32 in Form eines Infrarotstrahlers ist an der Walzenoberfläche kurz vor einer Beflockungseinrichtung 33 vorgesehen, um die Oberfläche der Verbundfolie, die ja bereits abgekühlt ist, durch Erwärmen wieder klebrig zu machen, damit die durch die Beflockungseinrichtung 33 auf die Folienoberfläche aufgebrachten Flocken von Fasern auch haften bleiben. Im übrigen entspricht die Ausführungsform der nach Fig. 3.

Beispiele

Im folgenden werden einige Beispiele für die Herstellung von Copolymeren und Termonomeren für die Versiegelungsschicht aufgeführt, wobei diese Polymere, wenn sie mit basischen Stoffen vermischt sind, auch als Material für die Trägerschicht verwendet werden können. Als die Löslichkeit in Basen bewirkendes Monomer ist Maleinsäureanhydrid bevorzugt, wobei es in einem Molverhältnis von ca. 1:1 mit dem Comonomeren verwendet wird. Bei Terpolymeren werden Mengen an den beiden anderen Comonomeren so gewählt, daß die Summe dieser Comonomere wiederum ein Molverhältnis von 1:1 mit Maleinsäureanhydrid ergibt. Als Comonomere werden bei Copolymeren vorzugsweise Methacrylat oder Äthylacrylat sowie Äthylvinyläther und bei Terpolymeren zusätzlich Butylacrylat verwendet.

Die Polymerisation wird in üblicher Weise unter Verwendung von Radikalbildnern, z. B. Peroxyden, als Katalysatoren bei Temperaturen zwischen Raumtemperatur und 150°C, vorzugsweise zwischen Raumtemperatur und 100°C durchgeführt. Als Polymerisationsverfahren sind die lösungsmittelfreie Polymerisation und die Emulsionspolymerisation bevorzugt. Einige Eigenschaften der so erhaltenen Copolymere und Terpolymere ergeben sich aus der nachfolgenden Tabelle. Zur Bildung der Trägerschicht können die Polymere mit bis zu 15 Gewichtsprozent an basischer Substanz vermischt werden, wobei solche bevorzugt sind, die einen weichmachenden Effekt haben, wie z. B. verschiedene Amine.

Herstellung und Charakterisierung von Maleinsäureanhydrid-Copolymeren
(Abkürzungen auf gesondertem Blatt)

| Nr. | Comonomere | | Katalysator | | LM | Molverhältnis | | | Polymerisations- | | Löslichkeit (b) | | | | | | | Fließbereich c) | Filme |
|---|---|---|---|---|---|---|---|---|---|---|---|---|---|---|---|---|---|---|---|
| | I | II | | % a) | | MSA | I | II | -temp. °C | -zeit h | WAS | NaOH 1 | 3 | 10 | PHOS 1 | 3 | 10 | °C | |
| 38 | EVE | | LAP | 0,1 | BEN | 1 | 1 | | 70 | 6 | 1 | | | 4 | | | 4 | 240E | flexibel |
| 39 | EVE | | LAP | 0,1 | SUB | 1 | 1 | | 70 | 6 | 1 | | | 3 | | | 4 | 240E | flexibel |
| 49 | MAC | | | | ACE | 1 | 1 | | 80 | 7 | 1 | | | 4 | | | 4 | 220E | flexibel, etwas klebrig |
| 51 | MAC | | | | BEN | 1 | 1,2 | | 80 | 6 | 1 | | | 3 | | | 4 | | flexibel, etwas klebrig |
| 68 | MAC | BAC | CHC | 0,1 | SUB | 1 | 0,6 | 0,4 | 60 | 7 | 1—2 | 4 | 4 | 4 | 4 | 4 | 4 | 220—230 | flexibel |
| 69 | MAC | BAC | CHC | 0,1 | SUB | 1 | 0,5 | 0,5 | 60 | 7 | 1—2 | 2 | 3 | 3 | 2 | 3 | 3 | | flexibel |

a) bezogen auf Monomerengemisch
b) 1/3/10: 1 bzw. 3 bzw. 10%ige Lösungen 24 h-Beuteilung: 1=unlöslich; 2=quillt; 3=langsam löslich; 4=schnell löslich
c) gemessen auf der Koflerbank; E=nur Erweichung

LM=Lösungsmittel
MSA=Maleinsäureanhydrid
WAS=Wasser
PHOS=Triammoniumphosphat
EVE=Ethylvinyläther
MAC=Methylacrylat
BAC=n-Butylacrylat
SUB=Substanz (lösungsmittelfrei)
ACE=Aceton
BEN=Benzol
LAP=Laurylperoxid
CHC=Bis(4-tertiärbutylcyclohexyl)peroxidicarbonat (Perkadox 16)

**Patentansprüche**

1. Verbundfolie aus mindestens zwei Schichten (2, 3), die von einer Seite her wasserfest und von der anderen Seite her wasserlöslich ist, wobei mindestens eine in Wasser normalerweise unlösliche, aber in saurem oder basischem Medium lösbare Versiegelungsschicht (3) mit einer in Wasser löslichen Schicht (2) verbunden ist und die Folie (1) im Bereich der wasserlöslichen Schicht (2) einen sauren bzw. basischen Lölungsvermittler für die Versiegelungsschicht enthält, dadurch gekennzeichnet, daß die in Wasser an sich unlösliche Schicht (3) aus einem extrudierbaren Thermoplast besteht und die in Wasser lösliche Schicht (2) aus einem extrudierbaren wasserlöslichen Thermoplast oder einem in Wasser nicht löslichen, in saurem oder basischem Medium aber lösbaren extrudierbaren Thermoplast besteht und die Folie (1) den sauren bzw. basischen Lösungsvermittler in einer Menge enthält, die zur Auflösung der in Wasser an sich unlöslichen Versiegelungsschicht (3) und ggf. auch des in Wasser nicht löslichen Materials der wasserlöslichen Schicht (2) ausreicht und die in Wasser normalerweise unlösliche Schicht (3) als völlig dichte Extrusionsfolie ausgebildet ist.

2. Verbundfolie nach Anspruch 1, dadurch gekennzeichnet, daß die in Wasser normalerweise unlösliche Versiegelungsschicht (3) und die in Wasser lösliche Schicht (2) aus demselben, in Wasser an sich unlöslichen thermoplastischen Kunststoff bestehen.

3. Verbundfolie nach Anspruch 1 oder 2, dadurch gekennzeichnet, daß die wasserlösliche Schicht (2) einen basischen Lösungsvermittler mindestens für die aus einem in basischem Medium löslichen Thermoplasten bestehende wasserunlösliche Versiegelungsschicht (3) enthält, wobei als Lösungsvermittler Carbonate, sekundäre und tertiäre Phosphate, Silicate, Borate, Amine und insbesondere Trialkanolamine bevorzugt sind.

4. Verbundfolie nach einem der Ansprüche 1 bis 3, dadurch gekennzeichnet, daß die lösungsvermittelnden Zusätze im Grenzbereich zwischen der wasserlöslichen Schicht (2) und der Versiegelungsschicht (3) in erhöhter Konzentration vorliegen.

5. Verbundfolie nach einem der vorhergehenden Ansprüche, dadurch gekennzeichnet, daß zwischen der wasserlöslichen Schicht (2) und der an sich in Wasser unlöslichen Versiegelungsschicht (3) eine die lösungsvermittelnden Zusätze enthaltende Zwischenschicht vorgesehen ist.

6. Verbundfolie nach einem der vorhergehenden Ansprüche, dadurch gekennzeichnet, daß mindestens die wasserunlösliche Versiegelungsschicht (3) aus einer thermoplastischen, in Wasser unlöslichen, jedoch in basischem Medium löslichen homopolymeren oder copolymeren Säure besteht, insbesondere einer solchen, die unter Verwendung von Acrylsäure, Methacrylsäure, Crotonsäure und/oder Maleinsäure gewonnen ist.

7. Verbundfolie nach einem der Ansprüche 1 bis 6, dadurch gekennzeichnet, daß mindestens die wasserunlösliche Versiegelungsschicht (3) aus einer im basischen Medium löslichen copolymeren oder terpolymeren Säure besteht, wobei als Comonomere bzw. Termonomere Vinyläther, Acrylate und Methacrylate bevorzugt sind.

8. Verbundfolie nach einem der Ansprüche 1 bis 7, dadurch gekennzeichnet, daß mindestens die wasserunlösliche Versiegelungsschicht (3) aus einem Copolymeren bzw. Terpolymeren aus Maleinsäureanhydrid besteht, wobei als Comonomere bzw. Termonomere Vinyläther, Acrylate und Methacrylate bevorzugt sind.

9. Verbundfolie nach einem der vorhergehenden Ansprüche, dadurch gekennzeichnet, daß mindestens die wasserfeste Versiegelungsschicht (3) aus durch lösungsmittelfreie Polymerisation hergestellten Polymeren besteht.

10. Verbundfolie nach einem der vorhergehenden Ansprüche, dadurch gekennzeichnet, daß mindestens die wasserfeste Versiegelungsschicht (3) aus als Flockungshilfsmittel verwendbaren Copolymeren besteht.

11. Verbundfolie nach einem der Ansprüche 1 oder 3 bis 10, dadurch gekennzeichnet, daß die wasserlösliche Schicht (2) aus einem thermoplastischen wasserlöslichen Cellulosederivat, insbesondere Hydroxyäthylcellulose oder Hydroxypropylcellulose besteht.

12. Verbundfolie nach einem der vorhergehenden Ansprüche, dadurch gekennzeichnet, daß sie in Form einer Bahn, eines Schlauches oder eines Beutels vorliegt.

13. Verbundfolie nach einem der vorhergehenden Ansprüche, dadurch gekennzeichnet, daß sie in Form von zwei Einzelfolien vorliegt, deren wasserlösliche Seiten (2) einander zugewandt sind und deren Versiegelungsschichten (3) die Außenseite bilden.

14. Verbundfolie nach Anspruch 13, dadurch gekennzeichnet, daß die wasserlöslichen Seiten (2) lose aneinander liegen.

15. Verbundfolie nach Anspruch 13, dadurch gekennzeichnet, daß die wasserlöslichen Seiten (2) über eine selbst durch Wasser lösbare poröse Zwischenschicht miteinander verbunden sind.

16. Verbundfolie nach einem der Ansprüche 1 bis 12, dadurch gekennzeichnet, daß eine poröse Schicht aus wasserlöslichem Material beidseitig mit einer Schicht (3) aus an sich in Wasser nicht löslichem Material versehen ist.

17. Verbundfolie nach einem der Ansprüche 1 bis 12, dadurch gekennzeichnet, daß sie aus mehreren Schichten besteht, wobei einzelne Schichten nicht vollflächig mit der nächsten verbunden sind, insbesondere daß sie mindestens drei Schichten aufweist und zwei dieser Schichten aus wasserlöslichem Material bestehen, die nach Art einer Luftpolster-Verbundfolie mit eingeschweißten Luftkissen ausgebildet sind.

18. Verfahren zur koninuierlichen Herstellung einer aus mindestens zwei miteinander verbundenen Schichten (2, 3) bestehenden Verbundfolie (1) gemäß einem der vorhergehenden Ansprüche, die von einer Seite her wasserfest ist und von der anderen Seite her wasserlöslich ist, wobei die wasserfeste Schicht (3) aus einem in saurem oder basischem Medium lösbaren Kunststoff besteht und eine in Wasser lösliche Schicht (2) einen sauren oder basischen Lösungsvermittler für die wasserfeste Schicht enthält, dadurch gekennzeichnet, daß die im wesentlichen wasserfeste Schicht (3) einerseits und die in Wasser lösliche, den Lösungsvermittler enthaltende Schicht (2) andererseits unter Verwendung von thermoplastischen Kunststoffen durch Extrusion hergestellt und miteinander verbunden werden.

19. Verfahren nach Anspruch 18, dadurch gekennzeichnet, daß mindestens zwei Schichten (2, 3) durch eine Koextrusionsdüse gemeinsam extrudiert und dabei miteinander verbunden werden.

20. Verfahren nach Anspruch 18 oder 19, dadurch gekennzeichnet, daß die die verschiedenen Schichten (2, 3) bildenden Folien nach dem Extrudieren einzeln oder im Verbund gereckt werden.

21. Verfahren nach einem der Ansprüche 18 bis 20, dadurch gekennzeichnet, daß die Auflösungsgeschwindigkeit der Folie (1) durch das Verhältnis des Säureanteils im an sich in Wasser nicht löslichen Materials durch Art und Gehalt des Lösungsvermittlers und/oder durch Einlagerung von schwer oder nicht löslichen Stoffen eingestellt wird.

22. Verfahren nach einem der Ansprüche 18 bis 21 zur Herstellung von Zuschnitten (5) aus Verbundfolien (1), insbesondere mit Ausschnitten und/oder von der Geraden abweichenden Rändern, dadurch gekennzeichnet, daß die Zuschnitte (5) thermisch, insbesondere durch Trennschweißen kontinuierlich beschnitten werden.

23. Verfahren nach Anspruch 22, dadurch gekennzeichnet, daß zur Herstellung der Verbundfolie (1) dienende Einzelfolien (2, 3) zeitlich nacheinander mit Werkzeugen (12) beschnitten werden, die sich mit den beschnittenen Folien (2, 3) mitbewegen und die nachfolgend auf die bereits beschnittenen Folien aufgelegten Folien paßgenau zu diesen zuschneiden.

24. Verfahren nach einem der Ansprüche 18 und 20 bis 23, dadurch gekennzeichnet, daß zur Herstellung der Verbundfolie (1) dienende Einzelfolien (2, 3) an örtlich getrennten Stellen beschnitten und dann miteinander verbunden werden.

25. Verfahren nach einem der Ansprüche 23 bis 24, dadurch gekennzeichnet, daß die Folie zur Bildung von periodisch wiederkehrenden Zuschnittsmustern (5, 6) auf eine endlose Fördereinrichtung (10), insbesondere eine Walze, aufgelegt werden, auf der sich Trennschweißeinrichtungen (12) in einem ganzzahligen Vielfachen der Periode befinden, und daß die Folien (2, 3) beim Anlegen auf die Fördereinrichtung beschnitten werden.

26. Verfahren nach einem der Ansprüche 18 bis 25 zur Herstellung einer Verbundfolie (1), bei der die wasserlösliche Schicht (2) und die in Wasser an sich unlösliche Versiegelungsschicht (3) aus demselben Kunststoff bestehen und vor einem Beschneiden miteinander verbunden werden, dadurch gekennzeichnet, daß beim Beschneiden anfallende Abfallstücke mit einem Gehalt an Lösungsvermittler dem Extruder für die Herstellung der wasserlöslichen Schicht (2) zugeführt werden.

27. Verfahren nach einem der Ansprüche 18 bis 26, dadurch gekennzeichnet, daß mindestens eine freie Oberseite (2) der Folie, vorzugsweise nach dem Beschneiden, mit textilen Fasern (4) beschichtet wird.

**Revendications**

1. Feuille composite constituée par au moins deux couches (2, 3) qui est hydrofuge sur un côté et soluble dans l'eau sur l'autre côté, dans laquelle au moins une couche de scellement (3), qui est normalement insoluble dans l'eau mais est soluble dans un milieu acide ou basique, est liée à une couche (2) soluble dans l'eau et la feuille (1) contient dans la région de la couche soluble dans l'eau (2) un agent de solubilisation acide ou basique pour la couche de scellement, caractérisée en ce que la couche (3) insoluble en soi dans l'eau est constituée par une substance thermoplastique extrudable, et la couche (2) soluble dans l'eau est constituée par une substance thermoplastique extrudable soluble dans l'eau ou par une substance thermoplastique extrudable non soluble dans l'eau mais soluble dans un milieu acide ou basique, et la feuille (1) contient l'agent de solubilisation acide ou basique en quantité suffisante pour dissoudre la couche de scellement (3) insoluble en soi dans l'eau et éventuellement aussi le matériau non soluble dans l'eau de la couche (2) soluble dans l'eau, et la couche (3) normalement insoluble dans l'eau est constituée sour forme d'une feuille extrudée totalement étanche.

2. Feuille composite selon la revendication 1, caractérisée en ce que la couche de scellement (3) normalement insoluble dans l'eau et la couche (2) soluble dans l'eau sont constituées par la même matière synthétique thermoplastique insoluble en soi dans l'eau.

3. Feuille composite selon la revendication 1 ou 2, caractérisée en ce que la couche (2) soluble dans l'eau contient un agent de solubilisation basique au moins pour la couche de scellement (3) insoluble dans l'eau et constituée par une substance thermoplastique soluble dans un milieu basique, des carbonates, des phosphates secondaires et tertiaires, des silicates, des borates, des amines et en particulier des trialcanolamines étant préférées en tant qu'agent de solubilisation.

4. Feuille composite selon l'une des revendications 1 à 3, caractérisée en ce que les produits additionnels servant d'agents de solubilisation se présentent selon une concentration plus élevée dans la région limite comprise entre la couche (2) soluble dans l'eau et la couche de scellement (3).

5. Feuille composite selon l'une des revendications précédentes, caractérisée en ce qu'entre la couche (2) soluble dans l'eau et la couche de scellement (3) insoluble en soi dans l'eau est prévue une couche intermédiaire contenant les produits additionnels servant d'agents de solubilisation.

6. Feuille composite selon l'une des revendications précédentes, caractérisée en ce qu'au moins la couche de scellement (3) insoluble dans l'eau est constituée d'un acide thermoplastique homopolymère ou copolymère insoluble dans l'eau mais soluble dans un milieu basique, en particulier un tel acide qui est obtenu par utilisation de l'acide acrylique, de l'acide méthacrylique, de l'acide crotonique et/ou de l'acide maléique.

7. Feuille composite selon l'une des revendication 1 à 6, caractérisée en ce qu'au moins la couche de scellement (3) insoluble dans l'eau est constituée d'un acide copolymère ou terpolymère soluble dans un milieu basique, l'éther vinylique, des acrylates et des méthacrylates étant préférés en tant que comonomère ou termonomère.

8. Feuille composite selon l'une des revendications 1 à 7, caractérisée en ce qu'au moins la couche de scellement (3) insoluble dans l'eau est constituée par un copolymère ou un terpolymère d'anhydride d'acide maléique, l'éther vinylique, des acrylates et des méthacrylates étant préférés en tant que comonomère ou termonomère.

9. Feuille composite selon l'une des revendications précédentes, caractérisée en ce qu'au moins la couche de scellement (3) hydrofuge est constituée par des polymères réalisés par une polymérisation sans solvant.

10. Feuille composite selon l'une des revendications précédentes, caractérisée en ce qu'au moins la couche de scellement (3) hydrofuge est constituée sous forme de copolymères pouvant être utilisés en tant qu'agents auxiliaires de floculation.

11. Feuille composite selon l'une des revendications 1 ou 3 à 10, caractérisée en ce que la couche (2) soluble dans l'eau est constituée par un dérivé de cellulose thermoplastique soluble dans l'eau et en particulier par de l'hydroxyéthylcellulose ou de l'hydroxypropylcellulose.

12. Feuille composite selon l'une des revendications précédentes, caractérisée en ce qu'elle se présente sous forme d'une bande, d'un tuyau ou d'un sac.

13. Feuille composite selon l'une des revendications précédentes, caractérisée en ce qu'elle se présente sous forme de deux feuilles individuelles, dont les côtés (2) solubles dans l'eau sont tournés l'un vers l'autre et dont les couches de scellement (3) forment les côtés extérieurs.

14. Feuille composite selon la revendication 13, caractérisée en ce que les côtés solubles dans l'eau (2) reposent l'un contre l'autre de façon lâche.

15. Feuille composite selon la revendication 13, caractérisée en ce que les côtés solubles dans l'eau (2) sont liés l'un à l'autre par l'intermédiaire d'une couche intermédiaire poreuse susceptible de se détacher d'elle-même par de l'eau.

16. Feuille composite selon l'une des revendications 1 à 12, caractérisée en ce qu'une couche poreuse en un matériau soluble dans l'eau est munie des deux côtés d'une couche (3) en un matériau non soluble en soi dans l'eau.

17. Feuille composite selon l'une des revendications 1 à 12, caractérisée en ce qu'elle est constituée par plusieurs couches, les couches individuelles n'étant pas liées par la totalité de leurs surfaces aux suivantes, et en particulier en ce qu'elle présente au moins trois couches et deux de ces couches sont constituées en un matériau soluble dans l'eau, qui sont constituées à la manière d'une feuille composite à coussins d'air comportant des coussins d'air incorporés par soudure.

18. Procédé de réalisation en continu d'une feuille composite (1) constituée par au moins deux couches (2, 3) liées l'une à l'autre selon l'une des revendications précédentes, qui est hydrofuge sur un côté et soluble dans l'eau sur l'autre côté, la couche hydrofuge (3) étant constituée en une matière synthétique soluble dans un agent acide ou basique et une couche (2) soluble dans l'eau contenant un agent de solubilisation acide ou basique pour la couche hydrofuge, caractérisé en ce que la couche (3) sensiblement hydrofuge, d'une part, et la couche (2) soluble dans l'eau et contenant l'agent de solubilisation, d'autre part, sont réalisées par extrusion en utilisant des matières synthétiques thermoplastiques et sont liées l'une à l'autre.

19. Procédé selon la revendication 18, caractérisé en ce qu'au moins deux couches (2, 3) sont extrudées en commun par une buse de coextrusion et sont liées l'une à l'autre au cours de cette opération.

20. Procédé selon la revendication 18 ou 19, caractérisé en ce que les feuilles formant les diverses couches (2, 3) sont étirées individuellement ou en commun après l'extrusion.

21. Procédé selon l'une des revendications 18 à 20, caractérisé en ce que la vitesse de dissolution de la feuille (1) est déterminée par la proportion de la fraction d'acide dans la matière non soluble en soi dans l'eau, par le type et la teneur de l'agent de solubilisation et/ou par incorporation de substances difficilement ou non solubles.

22. Procédé selon l'une des revendications 18 à 21 pour la réalisaion de sections (5) à partir de feuilles composites (1), comportant en particulier des découpes et/ou des bords s'écartant de la ligne droite, caractérisé en ce qui les sections (5) sont découpées de façon continue et thermiquement, en particulier par soudure séparatrice.

23. Procédé selon la revendication 22, caractérisé en ce que, pour réaliser la feuille composite (1), les feuilles individuelles (2, 3) servant à la constituer sont découpées successivement l'une après l'autre au moyen d'outils (12) qui se déplacent avec les feuilles découpées (2, 3) et qui découpent ensuite des feuilles appliquées sur les feuilles déjà découpées de façon précise par rapport à ces dernières.

24. Procédé selon l'une des revendications 18 et 20 à 23, caractérisé en ce que, pour réaliser la feuille composite (1), les feuilles individuelles (2, 3) servant à la constituer sont découpées en des endroits localement séparés et liées ensuite les unes aux autres.

25. Procédé selon l'une des revendications 23 à 24, caractérisé en ce que les feuilles destinées à la formation de motifs découpés (5, 6) revenant périodiquement sont appliquées sur un dispositif convoyeur sans fin (10), en particulier un cylindre, sur lequel sont disposés des dispositifs de soudure séparatrice (12) selon des multiples entiers de la période et en ce que les feuilles (2, 3) sont découpées lors de leur application sur le dispositif transporteur.

26. Procédé selon l'une des revendications 18 à 25 pour la réalisation d'une feuille composite (1), dans lequel la couche (2) soluble dans l'eau et la couche de scellement (3) insoluble en soi dans l'eau sont constituées de la même matière synthétique et sont liées l'une à l'autre avant une découpe, caractérisé en ce que les déchets formés par la découpe et possédant une teneur en agent de solubilisation sont envoyés à l'extrudeuse pour la réalisation de la couche (2) soluble dans l'eau.

27. Procédé selon l'une des revendications 18 à 26, caractérisé en ce qu'au moins un côté supérieur libre (2) de la feuille est recouvert, de préférence après la découpe, de fibres textiles (4).

**Claims**

1. Composite foil formed by at least two layers (2, 3) and which is waterproof from one side and water-soluble from the other side, wherein at least one sealing layer (3) which is normally insoluble in water, but is soluble in an acid or basic medium is joined to a water-soluble layer (2) and in the vicinity of the water-soluble layer (2), the foil (1) contains an acid or basic solubilizer for the sealing layer, characterized in that the per se water-insoluble layer (3) comprises an extrudable thermoplastic material and the water-soluble layer (2) comprises an extrudable water-soluble thermoplastic material, or an extrudable thermoplastic material, which is not soluble in water, but which is soluble in an acid or basic medium, the foil (1) containing the acid or basic solubilizer in a quantity adequate for dissolving the per se water-insoluble sealing layer (3) and optionally also the water-insoluble material of the water-soluble layer (2) and the normally-water-insoluble layer (3) is in the form of a completely tight extruded foil.

2. Composite foil according to claim 1, characterized in that the normally water-insoluble sealing layer (3) and the water-soluble layer (2) are formed from the same, per se water-insoluble thermoplastic material.

3. Composite foil according to claims 1 or 2, characterized in that the water-soluble layer (2) contains a basic solubilizer at least for the water-insoluble sealing layer (3) formed from a thermoplastic material which is soluble in the basic medium and as solubilizers preference is given to carbonates, secondary and tertiary phosphates, silicates, borates, amines and in particular trialkanol amines.

4. Composite foil according to one of the claims 1 to 3, characterized in that the solubilizing additives are present in increased concentration in the boundary region between the water-soluble layer (2) and the sealing layer (3).

5. Composite foil according to one of the preceding claims, characterized in that an intermediate layer containing the solubilizing additives is present between the water-soluble layer (2) and the per se water-insoluble sealing layer (3).

6. Composite foil according to one of the preceding claims, characterized in that at least the water-insoluble sealing layer (3) comprises a thermoplastic, water-insoluble, but basic medium-soluble homopolymeric or copolymeric acid, particularly an acid obtained by using acrylic acid, methacrylic acid, crotonic acid and/or maleic acid.

7. Composite foil according to one of the claims 1 to 6, characterized in that at least the water-insoluble sealing layer (3) comprises a basic medium-soluble copolymeric or terpolymeric acid, preference being given to vinyl ethers, acrylates and methacrylates as comonomers or termonomers.

8. Composite foil according to one of the claims 1 to 7, characterized in that at least the water-insoluble sealing layer (3) comprises a copolymer or terpolymer of maleic anhydride, preference being given to vinyl ethers, acrylates and methacrylates as comonomers or termonomers.

9. Composite foil according to one of the preceding claims, characterized in that at least the waterproof sealing layer (3) comprises polymers produced by solvent-free polymerization.

10. Composite foil according to one of the preceding claims, characterized in that at least the waterproof sealing layer (3) comprises copolymers usable as flocculation aids.

11. Composite foil according to one of the claims 1 or 3 to 10, characterized in that the water-soluble layer (2) comprises a thermoplastic, water-soluble cellulose derivative, particularly hydroxyethyl cellulose or hydroxypropyl cellulose.

12. Composite foil according to one of the preceding claims, characterized in that it is present in the form of a web, a hose or a bag.

13. Composite foil according to one of the preceding claims, characterized in that it is present in the

13

form of two individual foils, whose water-soluble sides (2) face one another, and whose sealing layers (3) form the outside.

14. Composite foil according to claim 13, characterized in that the water-soluble sides (2) loosely engage on one another.

15. Composite foil according to claim 13, characterized in that the water-soluble sides (2) are interconnected by a porous intermediate layer, which is itself water-soluble.

16. Composite foil according to one of the claims 1 to 12, characterized in that a porous layer of water-soluble material is provided on either side with a layer (3), or per se water-insoluble material.

17. Composite foil according to one of the claims 1 to 12, characterized in that it comprises a plurality of layers, some of the layers not being connected in full-surface manner with the next layer, whereby in particular it has at least three layers, whereof two of these layers are formed from water-soluble material which are constructed in the manner of an air cushion composite foil with bonded-in air cushions.

18. Process for the continuous manufacture of a composite foil (1) comprising at least two interconnected layers (2, 3), according to one of the preceding claims, which is waterproof from one side and water-soluble from the other side, the waterproof layer (3) comprising a plastic material soluble in an acid or basic medium and a water-soluble layer (2) contains an acid or basic solubilizer for the waterproof layer, characterized in that the substantially waterproof layer (3) on the one hand and the water-soluble, solubilizer-containing layer (2) on the other are produced by extrusion using thermoplastic materials and are interconnected.

19. Process according to claim 18, characterized in that at least two layers (2, 3) are jointly extruded through a coextrusion die and are thereby interconnected.

20. Process according to claims 18 or 19, characterized in that the foils forming the different layers (2, 3) are individually or in joined form stretched following extrusion.

21. Process according to one of the claims 18 to 20, characterized in that the dissolving rate of foil (1) is adjusted by the ratio of the acid proportion in the per se water-insoluble material as a function of the nature and content of the solubilizer and/or by incorporating difficultly soluble or insoluble material.

22. Process according to one of the claims 18 to 21, for the manufacture of blanks (5) from composite foils (1), particularly with cutouts and/or edges differing from a straight line, characterized in that the blanks (5) are thermally, continuously cut, particularly by separation welding.

23. Process according to claim 22, characterized in that for the manufacture of the individual layers (2, 3) forming the composite foil (1), they are time-successively cut with tools (12), which move along with the cut layers (2, 3) and then cut the foils placed on the already cut foils in accurately fitting manner with respect thereto.

24. Process according to one of the claims 18 and 20 to 23, characterized in that for the manufacture of the individual layers (2, 3) forming the composite foil (1) they are cut at locally separated points and are then joined together.

25. Process according to one of the claims 23 to 24, characterized in that the foil for forming periodically recurrent blank patterns (5, 6) is placed on a continuous conveying means (10), particularly a roller, and on which is located the separation welding means (12) in an integral multiple of the period and the layers (2, 3) are cut on placing on the conveying means.

26. Process according to one of the claims 18 to 25 for the manufacture of a composite foil (1), in which the water-soluble layer (2) and the per se water-insoluble sealing layer (3) are made from the same plastic material and are interconnected prior to cutting, characterized in that the waste material obtained during cutting is supplied together with a solublizer content to the extruder, for producing the water-soluble layer (2).

27. Process according to one of the claims 18 to 26, characterized in that at least one free top surface (2) of the foil is coated with textile fibres (4), preferably after cutting.

FIG.1

FIG. 3

FIG. 2

FIG.4

FIG.5

0 032 244